# EUROPEAN PATENT APPLICATION

(11) **EP 4 447 458 A1**
(43) Date of publication of application: **16.10.2024**
(21) Application number: 23739853.2
(22) Date of filing: 04.01.2023
(51) Int. Cl.: H04N 21/2187, H04N 21/4223, H04N 21/431, H04M 1/72403

(54) **VIDEO STREAM PUSHING METHOD AND APPARATUS, AND TERMINAL DEVICE AND STORAGE MEDIUM**

(30) Priority: 12.01.2022 CN 202210033822
(71) Applicant: BEIJING BYTEDANCE NETWORK TECHNOLOGY CO., LTD., Beijing 100041 (CN)
(72) Inventor: HUANG, Hailin, Beijing 100086 (CN)
(74) Representative: Dentons UK and Middle East LLP
(86) International application number: PCT/CN2023/070337
(87) International publication number: WO 2023/134509

(57) **Abstract**

Provided in the present disclosure are a video stream pushing method and apparatus, and a terminal device and a storage medium. The video stream pushing method may comprise: displaying a display interface, wherein at least two application windows are provided on the display interface; in response to a first opening request for a camera of a first application that is initiated by a user, displaying, in an application window of the first application, an image data stream which is photographed by an opened physical camera; and in response to a second opening request for a camera of a second application that is initiated by the user, displaying the image data stream in an application window of the second application.

## Description

The present application claims the priority to Chinese patent application No. 202210033822.4, filed to State Intellectual Property Office on January 12, 2022, the entire content of which is incorporated herein by reference.

### TECHNICAL FIELD

The present disclosure relates to the technical field of application program development, for example, to a video stream pushing method and apparatus, a terminal device and a storage medium.

### BACKGROUND

With the rapid development of Internet technology, live streaming on mobile phones has become more and more popular, and many platforms have launched services related to live streaming, such as sharing life, promoting projects and selling goods, etc., through live streaming.

In order to improve the efficiency of live streaming, the anchor hopes to perform live streaming on multiple live streaming Applications (Apps) at the same time. However, the relevant solution requires the anchor to prepare multiple mobile phones to realize, and the cost is relatively high.

### SUMMARY

The present disclosure provides a video stream pushing method and apparatus, a terminal device and a storage medium, so as to achieve the effect of allowing at least two applications to simultaneously perform video stream pushing on one terminal device.

The embodiments of the present disclosure provide a video stream pushing method, which comprises:
displaying a display interface, wherein at least two application windows are provided on the display interface;
displaying, in response to a camera first opening request initiated by a user for a first application, an image data stream captured by an opened physical camera in an application window of the first application; and
displaying, in response to a camera second opening request initiated by the user for a second application, the image data stream in an application window of the second application.

The embodiments of the present disclosure further provide a video stream pushing apparatus, which comprises:
a display interface displaying module, configured to display a display interface, wherein at least two application windows are provided on the display interface;
an image data stream first displaying module, configured to display, in response to a camera first opening request initiated by a user for a first application, an image data stream captured by an opened physical camera in an application window of the first application; and
an image data stream second displaying module, configured to display, in response to a camera second opening request initiated by the user for a second application, the image data stream in an application window of the second application.

The embodiments of the present disclosure further provide a terminal device which comprises:
one or more processors;
a memory, configured to store one or more programs;
wherein the one or more programs, when executed by the one or more processors, cause the one or more processors to realize the video stream pushing method provided by any one of embodiments of the present disclosure.

The embodiments of the present disclosure further provide a computer-readable storage medium, storing a computer program thereon, wherein the computer program, when executed by a processor, realizes the video stream pushing method provided by any one of embodiments of the present disclosure.

### BRIEF DESCRIPTION OF DRAWINGS

FIG. 1 is a flowchart of a video stream pushing method according to Embodiment 1 of the present disclosure;
FIG. 2 is a schematic diagram of a display interface in a video stream pushing method according to Embodiment 1 of the present disclosure;
FIG. 3 is a flowchart of a video stream pushing method according to Embodiment 2 of the present disclosure;
FIG. 4 is a schematic diagram of an implementation of a virtual camera in a video stream pushing method according to Embodiment 2 of the present disclosure;
FIG. 5 is a flowchart of camera scheduling in a video stream pushing method according to Embodiment 2 of the present disclosure;
FIG. 6 is a flowchart of a video stream pushing method according to Embodiment 3 of the present disclosure;
FIG. 7 is a schematic diagram of a display interface in a video stream pushing method according to Embodiment 3 of the present disclosure;
FIG. 8 is a flowchart of user operations in a video stream pushing method according to Embodiment 3 of the present disclosure;
FIG. 9 is a structural block diagram of a video stream pushing apparatus according to Embodiment 4 of the present disclosure; and
FIG. 10 is a schematic structural diagram of a terminal device according to Embodiment 5 of the present disclosure.

### DETAILED DESCRIPTION

The embodiments of the present disclosure are described hereinafter with reference to the accompanying drawings. Although some embodiments of the present disclosure are shown in the accompanying drawings, the present disclosure can be embodied in various forms and should not be construed as being limited to the embodiments set forth herein; conversely, these embodiments are provided for understanding the present disclosure. The accompanying drawings and embodiments of the present disclosure are merely illustrative, and are not used to limit the protection scope of the present disclosure.

Various steps described in the method embodiments of the present disclosure may be performed in a different order, and/or in parallel. Additionally, the method embodiments may include additional steps and/or omit performing the steps shown. The scope of the present disclosure is not limited in this respect.

The term "includes" or its variant used herein means "non exclusively includes", that is "includes, but is not limited to". The term "based on" means "at least partially based on". The term "an embodiment" means "at least one embodiment". The term "another embodiment" means "at least another embodiment". The term "some embodiments" means "at least some embodiments". Related definitions of other terms are given in the description hereinafter.

Concepts such as "first" and "second", etc., mentioned in the present disclosure are only intended to distinguish different apparatuses, modules or units, and are not used to limit the interdependence or sequence of functions performed by these apparatuses, modules or units.

"One" or "a plurality" mentioned in the present disclosure is illustrative rather than restrictive, and should be understood as "one or more" unless otherwise specified in the context.

The names of messages or information exchanged between multiple apparatuses in the embodiments of the present disclosure are used for illustrative purposes only, and are not used to limit the scope of these messages or information.

In the following embodiments, optional features and examples are provided in each embodiment at the same time, and various features described in the embodiments can be combined to form multiple alternative solutions, and each numbered embodiment should not be regarded as only one technical solution.

Before introducing the embodiments of the present disclosure, the application scenarios of the embodiments of the present disclosure are exemplified: because the image data stream captured by the mobile phone camera can only be obtained by one live streaming App for live streaming at one time (that is, only one live streaming App is allowed to open the mobile phone camera to capture the image data stream at one time), in order to achieve the effect of perform live streaming on multiple live streaming Apps at the same time, the relevant solution requires the anchor to prepare multiple mobile phones, and only one live streaming App runs on each mobile phone; thus, it can be ensured that the live streaming App can obtain the image data stream captured by the camera of the mobile phone camera on the mobile phone, so that the image data streams captured by the mobile phone cameras on different mobile phones can be obtained by different live streaming Apps for live streaming. The above solution has the problem of high cost of video stream pushing.

### Embodiment 1

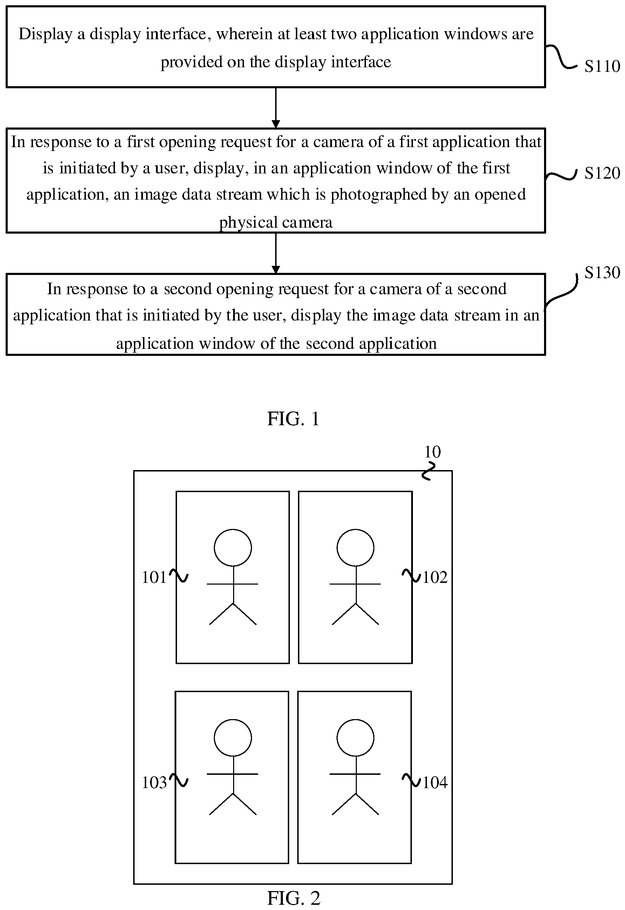

FIG. 1 is a flowchart of a video stream pushing method according to Embodiment 1 of the present disclosure. The present embodiment can be applied to the situation of video stream pushing, for example, to the situation of allowing at least two applications on the same terminal device to perform video stream pushing at the same time. The method can be executed by a video stream pushing apparatus provided by the embodiment of the present disclosure, the apparatus can be implemented by software and/or hardware, and the apparatus can be integrated on a terminal device.

Referring to FIG. 1, the method of the embodiment of the present disclosure includes the following steps.

S 110: displaying a display interface, wherein at least two application windows are provided on the display interface.

A display interface is displayed on the display screen of a terminal device, at least two application windows can be provided on the display interface, and the application window can be a window for displaying the application content of an application. Such a display interface can be realized on the premise that the multi-opening and split-screen function on the terminal device (that is, the function of allowing at least two applications to be displayed on the display interface at the same time) has been enabled. The above terminal device can be a mobile phone, a tablet computer, a laptop computer, a desktop computer, etc., which is not limited here.

S 120: displaying, in response to a camera first opening request initiated by a user for a first application, an image data stream captured by an opened physical camera in an application window of the first application.

The camera first opening request can be a request initiated by the user for a first application running on a terminal device to request to open a camera on the terminal device, and the first application can be an application having the need of opening the camera, that is, an application that can be effectively run after the camera is opened, such as a live streaming application, an image capturing application, a video recording application, etc., which is not limited here. The physical camera can be a physically existing camera set on the terminal device, such as a front camera or a rear camera. The image data stream (i.e., video data) can be a data stream captured by an opened physical camera, and the image data stream is displayed in the application window of the first application (i.e., the application window corresponding to the first application in the at least two application windows), thereby realizing the video stream pushing effect of the first application.

The opening operation of the physical camera may be performed before the camera first opening request is received, or may be performed after the camera first opening request is received, which is not limited here. In other words, the result of responding to the camera first opening request is not to open the physical camera, but to display the image data stream in the application window of the first application. As for what camera is opened after responding to the camera first opening request, it is not limited here.

S130: displaying, in response to a camera second opening request initiated by the user for a second application, the image data stream in an application window of the second application.

The camera second opening request can be a request initiated by the user for a second application running on the terminal device to request to open a camera on the terminal device, the first application and the second application are different applications, for example, one of them is a video recording application and the other of them is a live streaming application, or one of them is a live streaming application on platform A and the other of them is a live streaming application on platform B, and so on. The camera requested by the first application and the camera requested by the second application can be the same or different, which is not limited here. In addition, the opening operation of the physical camera may be performed before the camera second opening request is received, or may be performed after the camera second opening request is received, which is not limited here. Furthermore, the responding operation of the camera first opening request can be performed before or after the responding operation of the camera second opening request, which is not limited here. For an application window corresponding to the second application in the at least two application windows, the image data stream is displayed in the application window.

It can be seen from the above that both the application window of the first application and the application window of the second application display the image data stream captured by the physical camera, that is, the same image data stream is displayed in the two application windows, thereby achieving the effect of allowing at least two applications on the same terminal device to perform video stream pushing at the same time. In order to understand the application effect of the above technical solution, the application effect will be illustrated below in conjunction with examples. Illustratively, as shown in FIG. 2, four application windows are provided on the display interface 10, the application window 101 is the application window of a first application, the application window 102 is the application window of a second application, the application window 103 is the application window of a third application, the application window 104 is the application window of a fourth application, and all of the application windows display the same image data stream. That is, all of the four applications can obtain the image data stream, instead of only one application being able to obtain the image data stream, thereby achieving the effect of opening multiple applications at the same time and providing the same image data stream to the multiple applications at the same time.

According to the technical solution of the embodiment of the present disclosure, a display interface is displayed, wherein at least two application windows are provided on the display interface; in response to a camera first opening request initiated by a user for a first application, an image data stream captured by an opened physical camera is displayed in an application window of the first application; and in response to a camera second opening request initiated by the user for a second application, the image data stream is displayed in an application window of the second application. According to the technical solution, the image data stream captured by the physical camera can be displayed in the application windows of multiple applications on the same terminal device at the same time, which means that at least two applications can simultaneously perform video stream pushing under the condition that only one terminal device needs to be prepared, thereby reducing the cost of video stream pushing.

In an optional technical solution, on the basis of Embodiment 1, the video stream pushing method can further include: obtaining, in response to a camera third opening request, an application package name from the camera third opening request; opening, if the application package name is in a preset white list, a physical camera corresponding to the camera third opening request. The camera third opening request can be a request initiated by the user for a fourth application to request to open a physical camera, and the application type of the fourth application can be the same as or different from the application type of the first application and/or the second application, for example, all of these three applications are live streaming applications, or the first application and the second application are live streaming applications and the fourth application is an application for determining image sources of multiple live streaming applications, and so on, which is not limited here; and the application package name can be the package name of the fourth application. If the application package name is in the preset white list, it means that the fourth application is an application capable of opening a physical camera, then a corresponding physical camera is opened, so that the fourth application can obtain the image data stream captured by the opened physical camera, thereby further ensuring that the image data stream can be displayed in multiple application windows.

In another optional technical solution, on the basis of Embodiment 1, the at least two application windows include a first window and a second window, and the number of second windows is at least one; displaying the image data stream captured by the opened physical camera in the application window of the first application can include: using the first window as the application window of the first application, and displaying the image data stream captured by the opened physical camera in the first window; displaying the image data stream in the application window of the second application can include: using the first window as the application window of the second application, displaying the image data stream displayed in the first window in the second window, and displaying the image data stream of the second application in the first window. The first window can be understood as a main window, the second window can be understood as a secondary window, and the image data stream of the currently responded application can be displayed in the main window. When the currently responded application is updated (that is, another application is responded), the display window of the image data stream of the previously responded application can be changed from the main window to the secondary window, and the image data stream of the currently responded application can be displayed in the main window, thereby effectively ensuring that the image data stream of the currently responded application is always displayed in the main window.

In further another optional technical solution, on the basis of Embodiment 1, a parameter adjustment window is further provided on the display interface, and the video stream pushing method can further include: in response to a third click operation on the parameter adjustment window, updating and displaying the image data stream displayed in the application window of the first application and/or the application window of the second application, wherein the updated image data stream includes a data stream obtained by processing the image data stream based on the target parameter corresponding to the third click operation. At least one parameter type identifier, such as a sound effect identifier, a sound identifier, a virtual background identifier, etc., can be provided in the parameter adjustment window. After a parameter type identifier is clicked, candidate parameters corresponding to the parameter type identifier can be displayed. For example, a variety of candidate laughter parameters can be displayed after the sound effect identifier is clicked, a variety of sound special effect parameters can be displayed after the sound identifier is clicked, and a variety of candidate background parameters can be displayed after the virtual background identifier is clicked, and so on; and the candidate parameters corresponding to a default parameter type identifier can also be directly displayed, which is not limited here. The third click operation can be a click operation on the parameter adjustment window for selecting a candidate parameter to obtain a target parameter, and the image data stream can be processed based on the target parameter thus obtained, for example, the target data stream corresponding to the target parameter is added to the image data stream; and the processed image data stream is displayed in the application window of the first application and/or the application window of the second application, thereby achieving the effect of displaying the image data stream meeting actual needs of the user, and further improving the user experience.

In another optional technical solution, considering the application scenarios that may be involved in the embodiment of the present disclosure, a prompt window can further be provided on the display interface, and preset multimedia data, such as text data, picture data, video data, etc., can be displayed in the prompt window. In this way, the user can fluently display the content that he/she wants to show with the assistance of the multimedia data, thereby improving the user experience.

### Embodiment 2

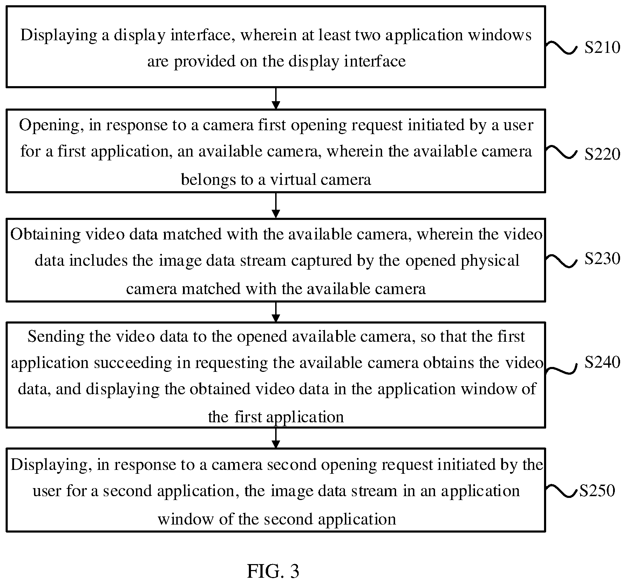

FIG. 3 is a flowchart of a video stream pushing method according to Embodiment 2 of the present disclosure. The present embodiment is described on the basis of multiple optional solutions in the above embodiment. In the present embodiment, optionally, after responding to the camera first opening request initiated by the user for the first application, the video stream pushing method can further include: opening an available camera, wherein the available camera belongs to a virtual camera; obtaining video data matched with the available camera, wherein the video data includes the image data stream captured by the opened physical camera matched with the available camera; accordingly, displaying the image data stream captured by the opened physical camera in the application window of the first application can include: sending the video data to the opened available camera, so that the first application succeeding in requesting the available camera obtains the video data, and displaying the obtained video data in the application window of the first application. The explanations of terms that are the same as or corresponding to those of the above embodiment are not repeated here.

As shown in FIG. 3, the method of the present embodiment can include the following steps.

S210: displaying a display interface, wherein at least two application windows are provided on the display interface.

S220: opening, in response to a camera first opening request initiated by a user for a first application, an available camera, wherein the available camera belongs to a virtual camera.

The virtual camera can be a camera, that does not actually exist physically, on the terminal device, that is, a camera that cannot directly capture the image data stream, but the virtual camera can share the image data stream captured by the physical camera after being opened. The available camera can be a camera currently in an available state among a plurality of virtual cameras, the available state can be understood as a state that exists in the terminal device and has not been requested by other applications except the first application. Whether the available camera is the requested camera when the user initiates the camera first opening request for the first application is not limited here.

S230: obtaining video data matched with the available camera, wherein the video data includes the image data stream captured by the opened physical camera matched with the available camera.

The video data can be a data stream matched with the available camera, that is, a data stream that can be obtained by the available camera. In practical applications, the video data can include the image data stream captured by the opened physical camera matched with the available camera. The physical camera matched with the available camera is emphasized here because physical cameras corresponding to different virtual cameras may be the same or different.

S240: sending the video data to the opened available camera, so that the first application succeeding in requesting the available camera obtains the video data, and displaying the obtained video data in the application window of the first application.

The video data is sent to the opened available camera, and in this way, the first application succeeding in requesting the available camera can obtain the video data, and the obtained video data can be displayed in the application window of the first application.

S250: displaying, in response to a camera second opening request initiated by the user for a second application, the image data stream in an application window of the second application.

In practical applications, optionally, the process of displaying the image data stream in the application window of the second application and the process of displaying the image data stream (that is, the video data including the image data stream) in the application window of the first application can be the same or different, which is not limited here. If the displaying process of them is the same, similar to physical cameras, each virtual camera can only be requested by one application, then the available camera requested by the first application and the available camera requested by the second application are different virtual cameras.

According to the technical solution of the embodiment of the present disclosure, at least two virtual cameras are virtualized on the terminal device, and the at least two virtual cameras share the image data stream captured by the physical camera; in this way, when multiple applications are matched with corresponding available cameras from multiple virtual cameras, respectively, the image data stream can be obtained by opening the available cameras, thereby achieving the effect of displaying the same image data stream in the application windows of multiple applications.

In an optional technical solution, on the basis of Embodiment 2, a physical camera module of the physical camera and a virtual camera module of the virtual camera are both deployed in a hardware abstraction layer of an Android system, and the virtual camera is opened through a camera service set in a framework layer of the Android system. The physical camera module can be a code segment for realizing corresponding functions of the physical camera, the virtual camera module can be a code segment for realizing corresponding functions of the virtual camera, and both modules can be deployed in the Hardware Abstraction Layer (HAL) of the Android system. On this basis, the virtual camera can be opened through a camera service (CameraSerivce) set in the Framework layer of the Android system, thereby realizing the effect of deploying and applying the virtual camera in the terminal device. In order to better understand the implementation process of the virtual camera, the following will be described in conjunction with examples.

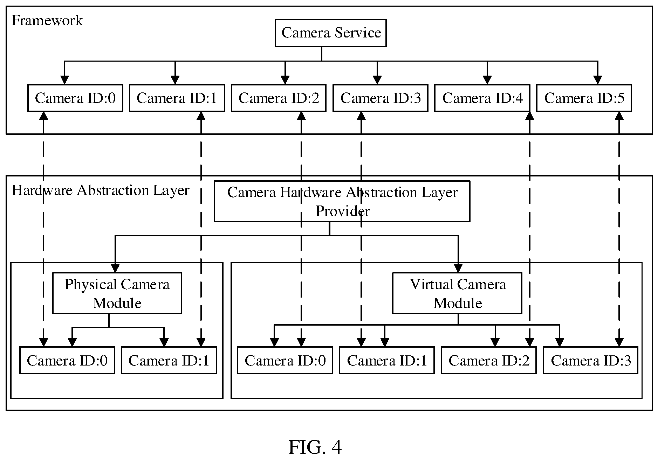

For example, as shown in FIG. 4, when an application installed in the Android system opens any camera, it can be realized through the CameraSerivce set in the Framework layer; HAL can be used to manage hardware devices; the camera hardware abstraction layer provider (CameraHalProvider) is a service in HAL, which interfaces with the CameraService in the Framework layer above and is responsible for managing camera devices below; the internal physical camera module (InternalCamera) can generally include a front camera (camera ID:0) and a rear camera (camera ID:1); the virtual camera module (EmuCamera) can set multiple virtual cameras according to actual needs, and the present example takes four virtual cameras (camera ID:0, camera ID: 1, camera ID:2 and camera ID:3) as an example. There is a mapping relationship between the camera IDs in the Framework layer and the camera IDs in HAL, so that the CameraSerivce can determine which camera to be opened when working.

In another optional technical solution, on the basis of Embodiment 2, before opening the available camera, the video stream pushing method can further include: obtaining a camera identifier from the camera first opening request, and determining whether a to-be-requested camera corresponding to the camera identifier is the physical camera; judging, in the case where it is determined that the to-be-requested camera corresponding to the camera identifier is not the physical camera, whether the camera identifier can be used, and determining, according to a judgment result, whether or not to use the to-be-requested camera as the available camera, so as to obtain the available camera; modifying, in the case where it is determined that the to-be-requested camera corresponding to the camera identifier is the physical camera, the camera identifier based on a first modification strategy, and updating the camera identifier according to a modification result, so that the to-be-requested camera corresponding to the camera identifier belongs to the virtual camera, and performing the step of judging whether the camera identifier can be used, again.

The camera identifier can be an identifier of the camera requested to be opened by the first application (that is, the to-be-requested camera), such as the number after the camera ID in the above example. In order to enable different applications to display the same image data stream at the same time, the cameras that can be requested by multiple applications are all virtual cameras. Therefore, it can be determined whether the to-be-requested camera is a physical camera, and if not (that is, the to-be-requested camera is not a physical camera), it can be judged whether the camera identifier can be used, that is, whether the virtual camera corresponding to the camera identifier exists and has not been requested by other applications, so as to determine whether or not to use the to-be-requested camera as the available camera according to the judgment result, thereby obtaining the available camera. Otherwise (that is, the to-be-requested camera is a physical camera), the camera identifier can be modified based on the first modification strategy, and the camera identifier can be updated according to the modification result, so that the to-be-requested camera corresponding to the camera identifier belongs to a virtual camera, that is, the goal of this modification is to make the to-be-requested camera correspond to a virtual camera; and therefore, an available camera can be obtained by judging whether the camera identifier can be used. The above technical solution achieves the effect of effectively obtaining an available camera.

On this basis, optionally, judging whether the camera identifier can be used and determining, according to the judgment result, whether or not to use the to-be-requested camera as the available camera, can include: judging whether the camera identifier has been used; modifying, in the case where the camera identifier has been used, the camera identifier based on a second modification strategy, and updating the camera identifier according to a modification result, and performing the step of judging whether the camera identifier has been used, again; using, in the case where the camera identifier has not been used, the to-be-requested camera corresponding to the camera identifier as the available camera when the camera identifier belongs to a valid identifier.

Having been used indicates that the camera identifier has been requested by other applications except the first application. Therefore, when the camera logo has been used, the camera identifier can be modified based on the second modification strategy, and whether the modified camera identifier has been used is judged again, thereby obtaining an unused camera identifier. The first modification strategy and the second modification strategy can be the same or different modification strategies, and their settings are related to the actual application scenarios, which is not limited here. Accordingly, when the camera identifier is not used, it can be determined whether the camera identifier belongs to a valid identifier (that is, there exists a camera corresponding to the camera identifier in the terminal device), and if so, the to-be-requested camera corresponding to the camera identifier can be used as an available camera, thereby achieving the effect of effectively obtaining an available camera.

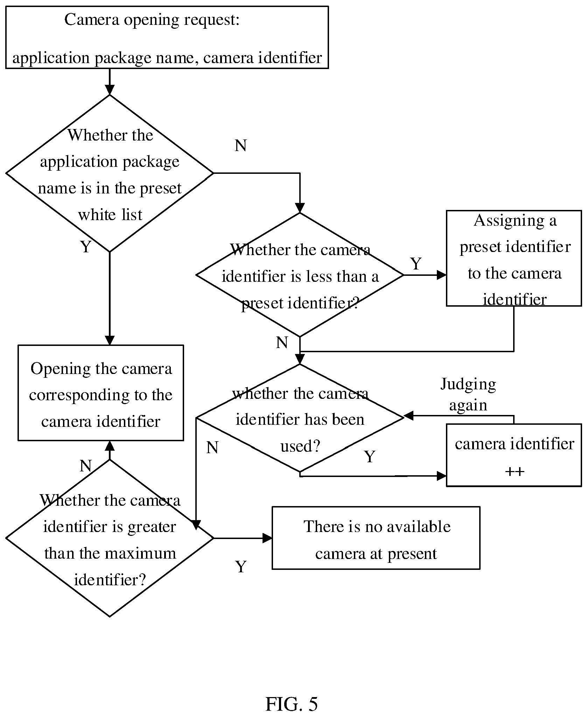

In order to understand the implementation process of the above multiple technical solutions, it will be illustrated below in conjunction with examples. Illustratively, in order to enable different applications to open virtual cameras matched thereto, a scheduling algorithm, which is used for allocating physical cameras and virtual cameras and as shown in FIG. 5, is set, and the scheduling algorithm can be integrated in the framework layer and the hardware abstraction layer as shown in FIG. 4. When an application is started, an camera opening request initiated by the user for the application is sent to the CameraSerivce, so that the CameraSerivce provides the camera opening request to the scheduling algorithm, so that the scheduling algorithm can execute the algorithm logic as shown in FIG. 5 according to the camera opening request to determine which camera is to be assigned to the application.

It is determined whether the application can request a physical camera by determining whether the application package name obtained from the camera opening request is in the preset white list, and if so, the physical camera corresponding to the camera identifier in the camera opening request is directly opened; otherwise, it means that the application belongs to an application that cannot request a physical camera, and then it is determined whether the camera corresponding to the camera identifier is a physical camera by determining whether the camera identifier is less than a preset identifier. In practical applications, optionally, when the camera identifiers corresponding to multiple physical cameras in the CameraSerivce are all less than the camera identifiers corresponding to multiple virtual cameras, the preset identity can be the camera identifier with the smallest value among the camera identifiers corresponding to the multiple virtual cameras. In combination with the example shown in FIG. 4, the preset identity can be 2. When the camera identifier is less than the preset identifier, it means that the application requests a physical camera, and the preset identifier can be assigned to the camera identifier to make the application request a virtual camera; otherwise, it means that the application requests a virtual camera.

Further, it is judged whether the camera identifier has been used, and if so, the camera identifier is increased by 1 (+1, that is, the camera ID in the CameraSerivce is moved backward by one), and judgment is performed again; otherwise, it is judged whether the camera identifier is greater than the maximum identifier, and the maximum identifier can be the maximum value among multiple effective identifiers, and taking the example shown in FIG. 4 as an example, the maximum identifier can be 5. If the camera identifier is greater than the maximum identifier, it means that there is no available camera (i.e. virtual camera) that can be assigned to the application at present; otherwise, the virtual camera corresponding to the camera identifier is directly opened. In practical applications, optionally, the execution process of the camera opening operation can be that the CameraSerivce provides the determined camera identifier to the CameraHalProvider, and the CameraHalProvider determines which camera needs to be opened according to the preset mapping relationship, and opens the camera. The above example can effectively ensure that multiple applications can be matched to the appropriate physical/virtual cameras.

### Embodiment 3

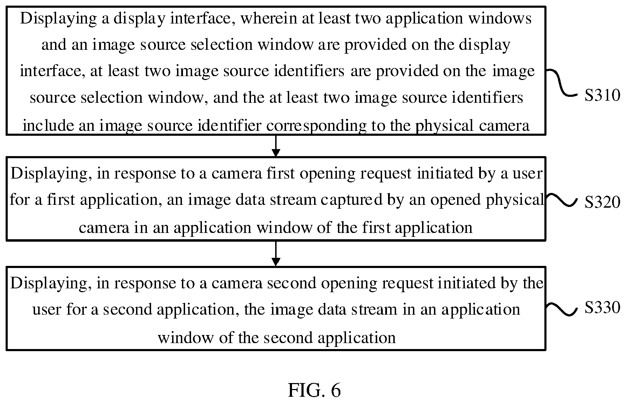

FIG. 6 is a flowchart of a video stream pushing method according to Embodiment 3 of the present disclosure. The present embodiment is described on the basis of multiple optional solutions in the above embodiment. In the present embodiment, optionally, an image source selection window is further provided on the display interface, at least two image source identifiers are provided on the image source selection window, and the at least two image source identifiers include an image source identifier corresponding to the physical camera. The explanations of terms that are the same as or corresponding to those of the above embodiment are not repeated here.

As shown in FIG. 6, the method of the present embodiment can include the following steps.

S310: displaying a display interface, wherein at least two application windows and an image source selection window are provided on the display interface, at least two image source identifiers are provided on the image source selection window, and the at least two image source identifiers include an image source identifier corresponding to the physical camera.

An image source selection window is further provided on the display interface, and the image source selection window is a window for selecting the image source of the virtual camera, that is, a window for selecting which image data stream to be sent to the virtual camera. At least two image source identifiers are provided on the image source selection window, and each image source identifier corresponds to an image source, such as a front camera, a rear camera, a front camera + a background special effect, a rear camera + a background special effect, or a generated data stream (e.g., pure virtual data rendered by a game engine, video data already recorded, etc.), etc., which is not limited here. In practical applications, optionally, the image source selection window can be the display effect of a pre-developed pilot application when being applied, and for example, the pilot application is expanded from a floating window to the image source selection window when being applied; and the pilot application can be an application for controlling the image source of a virtual camera. In order to simultaneously display the image data stream captured by the physical camera in the application window of the first application and the application window of the second application, the at least two image source identifiers can include an image source identifier corresponding to the physical camera, so that when the image source identifier corresponding to the physical camera is selected, the image data stream captured by the physical camera can be provided to multiple virtual cameras.

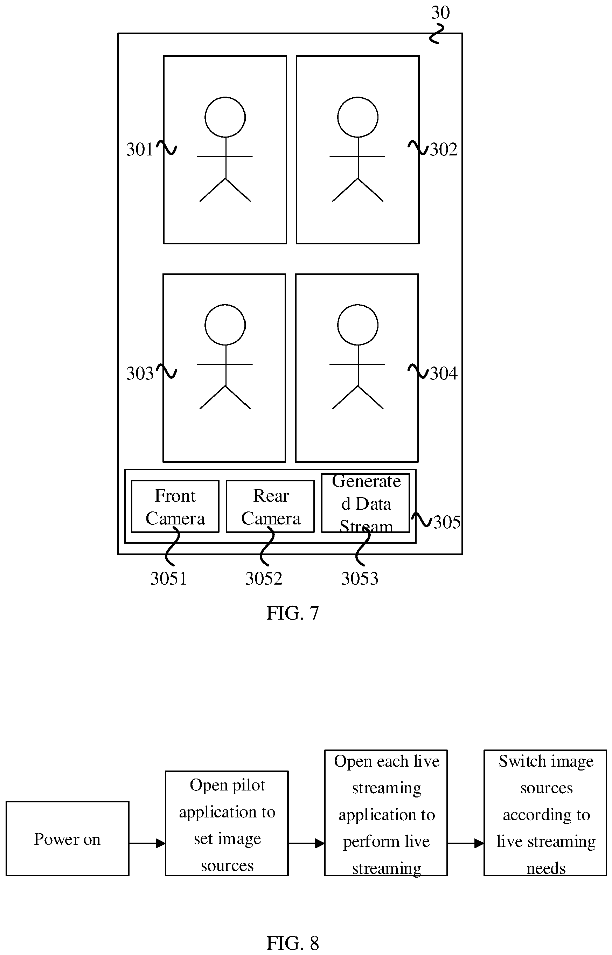

In order to understand the application effect of the above technical solution, the above technical solution will be illustrated below in conjunction with examples. Illustratively, as shown in FIG. 7, four application windows and an image source selection window 305 are provided on the display interface 30. The application window 301 is the application window of the first application, the application window 302 is the application window of the second application, the application window 303 is the application window of the third application, and the application window 304 is the application window of the fourth application. Three image source identifiers are provided on the image source selection window 305, namely a front camera 3051, a rear camera 3052, and a generated data stream 3053. In this way, it can be determined which data stream is to be sent to multiple virtual cameras by a click operation on the image source selection window, thereby achieving the effect that multiple applications can display corresponding data streams according to actual application needs.

S320: displaying, in response to a camera first opening request initiated by a user for a first application, an image data stream captured by an opened physical camera in an application window of the first application.

S330: displaying, in response to a camera second opening request initiated by the user for a second application, the image data stream in an application window of the second application.

According to the technical solution of the embodiment of the present disclosure, an image source selection window is provided on the display interface, at least two image source identifiers are provided on the image source selection window, and the at least two image source identifiers include an image source identifier corresponding to the physical camera. Thus, it can be ensured that the image data stream captured by the physical camera can be displayed in multiple application windows, and it can also be realized that the data streams originating from other image sources are displayed multiple application windows, thereby enhancing the diversity of video stream pushing.

In an optional technical solution, on the basis of Embodiment 3, the video stream pushing method can further include: determining, in response to a first click operation on the image source selection window for a first camera, a selected image source identifier, wherein the first camera belongs to a virtual camera; accordingly, displaying the image data stream captured by the opened physical camera in the application window of the first application can include: displaying, when the first application succeeds in requesting the first camera and the selected image source identifier corresponds to a physical camera, the image data stream captured by the opened physical camera in the application window of the first application. The first camera belongs to a virtual camera, the first click operation can be an operation of clicking on the image source selection window for selecting the image source of the first camera, and a selected image source identifier is determined from multiple image source identifiers in response to the first click operation. Furthermore, when the first application succeeds in requesting the first camera and the selected image source identifier corresponds to a physical camera, the image data stream captured by the physical camera can be displayed in the application window of the first application. In other words, the click operation can be aimed at a virtual camera; thus, the data streams displayed in the application windows of multiple applications can be the same or different, which is related to the actual application needs, thereby enriching the modes of video stream pushing and improving the effect of video stream pushing.

In another optional technical solution, on the basis of Embodiment 3, the video stream pushing method can further include: determining, in response to a second click operation on the image source selection window for a second camera, a selected image source identifier, wherein the second camera belongs to a virtual camera; in response to a camera fourth opening request initiated by the user for a third application, displaying, when the third application succeeds in requesting the second camera and the selected image source identifier corresponds to a generated data stream or a processed data stream obtained by processing the image data stream, the generated data stream or the processed data stream in an application window of the third application. The second camera belongs to a virtual camera, the second click operation can be an operation of clicking on the image source selection window for selecting the image source of the second camera, and a selected image source identifier is determined from multiple image source identifiers in response to the second click operation. The camera fourth opening request can be a request initiated by the user for a third application to request to open a camera. When the third application succeeds in requesting the second camera in response to the camera fourth opening request and he selected image source identifier corresponds to a generated data stream or a processed data stream obtained by processing the image data stream, the generated data stream or the processed data stream can be displayed in the application window of the third application, thereby realizing the display of data streams other than the image data stream in the application window, and further enhancing the diversity of video stream pushing.

In order to understand the implementation process of the above technical solutions more intuitively, the following will be illustrated in combination with user operations and terminal device responses. Illustratively, as shown in FIG. 8, the user turns on the terminal device, opens the pilot application to set the image sources of multiple virtual cameras, and opens multiple live streaming applications in turn to perform live streaming. For each live streaming application, when the live streaming application is started, a camera opening request is sent to the CameraService, and the CameraService automatically starts the pilot application after receiving the camera opening request, so that the started pilot application opens the physical camera to work; after a live streaming application succeeds in requesting a virtual camera, the started pilot application sends the image data stream captured by the physical camera or other data stream (depending on the image source matched by the user for the virtual camera) to the virtual camera, so that the live streaming application can perform live streaming based on the obtained data stream. In the process of live streaming, the user can further switch image sources according to live streaming needs, thereby ensuring the diversity of live streaming.

### Embodiment 4

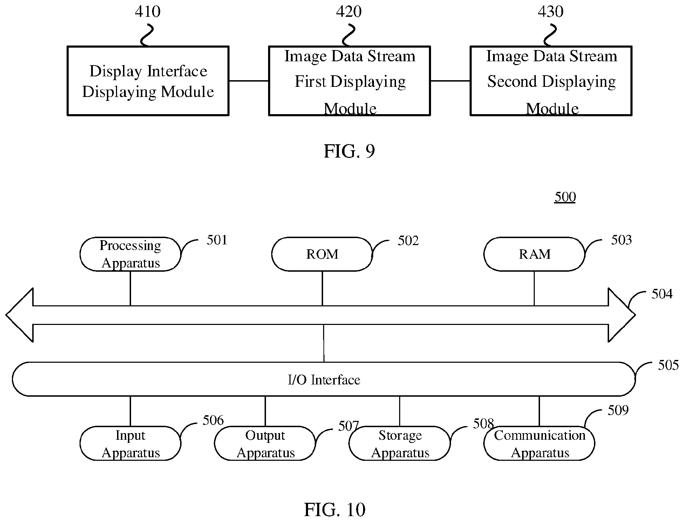

FIG. 9 is a structural block diagram of a video stream pushing apparatus according to Embodiment 4 of the present disclosure, and the apparatus is configured to execute the video stream pushing method according to any of the above embodiments. The apparatus belongs to the same concept as the video stream pushing method in the above embodiments, and for details not described in detail in the embodiment of the video stream pushing apparatus, please refer to the embodiments of the video stream pushing method. Referring to FIG. 9, the apparatus include a display interface displaying module 410, an image data stream first displaying module 420 and an image data stream second displaying module 430.

The display interface displaying module 410 is configured to display a display interface, wherein at least two application windows are provided on the display interface.

The image data stream first displaying module 420 is configured to display, in response to a camera first opening request initiated by a user for a first application, an image data stream captured by an opened physical camera in an application window of the first application.

The image data stream second displaying module 430 is configured to display, in response to a camera second opening request initiated by the user for a second application, the image data stream in an application window of the second application.

In the video stream pushing apparatus according to Embodiment 4 of the present disclosure, the display interface displaying module 410 displays a display interface, wherein at least two application windows are provided on the display interface; the image data stream first displaying module 420 displays, in response to a camera first opening request initiated by a user for a first application, an image data stream captured by an opened physical camera in an application window of the first application; the image data stream second displaying module 430 displays, in response to a camera second opening request initiated by the user for a second application, the image data stream captured by the physical camera can be displayed in the application windows of multiple applications on the same terminal device at the same time, which means that at least two applications can simultaneously perform video stream pushing under the condition that only one terminal device needs to be prepared, thereby reducing the cost of video stream pushing.

The video stream pushing apparatus provided by the embodiment of the present disclosure can execute the video stream pushing method provided by any embodiment of the present disclosure, and has corresponding functional modules for executing the method and corresponding effects.

In the above embodiment of the video stream pushing apparatus, multiple units and modules included are only divided according to functional logic, but are not limited to the above division, as long as corresponding functions can be realized; in addition, the names of multiple functional units are intended only for the convenience of distinguishing each other, and are not used to limit the protection scope of the present disclosure.

### Embodiment 5

Hereinafter, please refer to FIG. 10, which shows a schematic structural diagram of a terminal device 500 suitable for implementing the embodiments of the present disclosure. The terminal device in the embodiment of the present disclosure can include, a mobile terminal such as a mobile phone, a laptop computer, a digital broadcast receiver, a personal digital assistant (PDA), a portable android device (PAD), a portable multimedia player (PMP), a vehicle-mounted terminal (e.g., vehicle-mounted navigation terminal), etc., and a fixed terminal such as a digital television (TV), a desktop computer, etc. The terminal device shown in FIG. 10 is merely an example, and should not limit the functions and application scope of the embodiment of the present disclosure.

As shown in FIG. 10, the terminal device 500 can include a processing apparatus (e.g., central processing unit, graphics processing unit, etc.) 501, and the processing apparatus 501 can execute various appropriate actions and processes according to a program stored on a read-only memory (ROM) 502 or a program loaded from a storage apparatus 508 into a random access memory (RAM) 503. In the RAM 503, various programs and data necessary for the operations of the terminal device 500 are also stored. The processing apparatus 501, the ROM 502, and the RAM 503 are connected to each other through a bus 504. An input/output (I/O) interface 4505 is also connected to the bus 504.

The following apparatuses can be connected to the I/O interface 505: an input apparatus 506 including, for example, a touch screen, a touch pad, a keyboard, a mouse, a camera, a microphone, an accelerometer, a gyroscope, etc.; an output apparatus 507 including, for example, a liquid crystal display (LCD), a speaker, a vibrator, etc.; a storage apparatus 508 including, for example, a magnetic tape, a hard disk, etc.; and a communication apparatus 509. The communication apparatus 409 can allow the terminal device 500 to perform wireless or wired communication with another device to exchange data. Although FIG. 10 illustrates the terminal device 400 with various apparatuses, it is to be understood that all illustrated apparatuses are not required to be implemented or provided. More or fewer apparatuses can be alternatively implemented or provided.

### Embodiment 6

According to the embodiment of the present disclosure, the process described above with reference to the flowcharts can be implemented as a computer software program. For example, an embodiment of the present disclosure includes a computer program product, the computer program product includes a computer program carried on a non-transitory computer-readable medium, and the computer program contains program codes for performing the method illustrated by the flowcharts. In such an embodiment, the computer program can be downloaded and installed from a network via the communication apparatus 509, or installed from the storage apparatus 508, or installed from the ROM 502. When the computer program is executed by the processing apparatus 501, the above functions defined in the method according to the embodiment of the present disclosure are performed.

The above computer-readable medium in the present disclosure can be a computer-readable signal medium or a computer-readable storage medium or any combination thereof. The computer-readable storage medium can be, for example, an electronic, magnetic, optical, electromagnetic, infrared, or semiconductor system, apparatus, or device, or any combination of the above. The computer-readable storage medium can include: an electrical connection having one or more wires, a portable computer diskette, a hard disk, a random access memory (RAM), a read-only memory (ROM), an erasable programmable read-only memory (EPROM), a flash memory, an optical fiber, a portable compact disc read-only memory (CD-ROM), an optical storage device, a magnetic storage device, or any suitable combination of the above. In the present disclosure, the computer-readable storage medium can be any tangible medium containing or storing a program, and the program can be used by or in conjunction with an instruction execution system, apparatus, or device. In the present disclosure, the computer-readable signal medium can include a data signal propagated on a baseband or as part of a carrier wave, in which computer-readable program code is carried. Such a propagated data signal can be in a variety of forms, including an electro-magnetic signal, an optical signal, or any suitable combination of the above. The computer-readable signal medium can also be any computer-readable medium other than the computer-readable storage medium, and the computer-readable signal medium can send, propagate, or transmit a program for use by or in conjunction with an instruction execution system, apparatus, or device. Program codes contained on the computer-readable medium can be transmitted using any suitable medium, including: an electrical wire, an optical cable, radio frequency (RF), etc., or any suitable combination of the above. The storage medium can be a non-transitory storage medium.

In some implementations, a client and a server can communicate using any network protocol currently known or to be developed in the future, such as HTTP (HyperText Transfer Protocol), etc., and can be interconnected with any form or medium of digital data communication (e.g., a communication network). Examples of the communication network include a local area network (LAN), a wide area network (WAN), an internet (e.g., the Internet), and a peer-to-peer network (e.g., ad hoc peer-to-peer network), as well as any network currently known or to be developed in the future.

The above computer-readable medium can be contained in the above terminal device 500; or can exist alone without being assembled into the terminal device 500.

The above computer-readable medium has thereon carried one or more programs which, when executed by the terminal device, cause the terminal device to: display a display interface, wherein at least two application windows are provided on the display interface; display, in response to a camera first opening request initiated by a user for a first application, an image data stream captured by an opened physical camera in an application window of the first application; and display, in response to a camera second opening request initiated by the user for a second application, the image data stream in an application window of the second application.

Computer program codes for performing operations of the present disclosure can be written in one or more programming languages or a combination thereof, and the programming language includes an object-oriented programming language such as Java, Smalltalk, C++, and also includes a conventional procedural programming language such as a "C" language or similar programming language. The program codes can be executed entirely on a user computer, partly on the user computer, as a stand-alone software package, partly on the user computer and partly on a remote computer, or entirely on the remote computer or a server. In a scene where the remote computer is involved, the remote computer can be connected to the user computer through any type of network, including a local area network (LAN) or a wide area network (WAN), or can be connected to an external computer (for example, through the Internet using an Internet service provider).

The flowcharts and block diagrams in the accompanying drawings illustrate the possibly implemented architecture, functions, and operations of the system, method and computer program product according to various embodiments of the present disclosure. In this regard, each block in the flowcharts or block diagrams can represent one module, program segment, or portion of code, which contains one or more executable instructions for implementing the specified logic function. In some alternative implementations, functions noted in blocks can occur in an order different from the order noted in the accompanying drawings. For example, two blocks shown in succession can, in fact, be executed substantially concurrently, and they can sometimes be executed in a reverse order, which depends upon functions involved. Each block in the block diagrams and/or flowcharts, and a combination of blocks in the block diagrams and/or flowcharts, can be implemented by a dedicated hardware-based system that performs a specified function or operation, or can be implemented by a combination of dedicated hardware and computer instructions.

The involved units described in the embodiment of the present disclosure can be implemented in a software manner, and can also be implemented in a hardware manner. The names of the units do not constitute a limitation on the unit itself under certain circumstance. For example, the display interface displaying module can also be described as "a module that displays a display interface, wherein at least two application windows are provided on the display interface".

The above functions described herein can be performed, at least in part, by one or more hardware logic components. For example, an exemplary type of hardware logic component that can be used includes: a field programmable gate array (FPGA), an application specific integrated circuit (ASIC), an application specific standard product (ASSP), a system on a chip (SOC), a complex programmable logic device (CPLD), and so on.

In the context of the present disclosure, a machine-readable medium can be a tangible medium, which can contain or store a program that is used by or in conjunction with an instruction execution system, apparatus, or device. The machine-readable medium can be a machine-readable signal medium or a machine-readable storage medium. The machine-readable medium can include an electronic, magnetic, optical, electromagnetic, infrared, or semiconductor system, apparatus, or device, or any suitable combination of the above. The machine-readable storage medium can include an electrical connection based on one or more wires, a portable computer diskette, a hard disk, a RAM, a ROM, an erasable programmable read-only memory (EPROM), a flash memory, an optical fiber, a portable CD-ROM, an optical storage device, a magnetic storage device, or any suitable combination of the above.

According to one or more embodiments of the present disclosure, Example 1 provides a video stream pushing method, which can include:
displaying a display interface, wherein at least two application windows are provided on the display interface;
displaying, in response to a camera first opening request initiated by a user for a first application, an image data stream captured by an opened physical camera in an application window of the first application;
displaying, in response to a camera second opening request initiated by the user for a second application, the image data stream in an application window of the second application.

According to one or more embodiments of the present disclosure, Example 2 provides the method of Example 1, and after responding to the camera first opening request initiated by the user for the first application, the video stream pushing method can further include:
opening an available camera, wherein the available camera belongs to a virtual camera;
obtaining video data matched with the available camera, wherein the video data includes the image data stream captured by the opened physical camera matched with the available camera;
the displaying an image data stream captured by an opened physical camera in an application window of the first application includes:
sending the video data to the opened available camera, so that the first application succeeding in requesting the available camera obtains the video data, and displaying the obtained video data in the application window of the first application.

According to one or more embodiments of the present disclosure, Example 3 provides the method of Example 2, and before opening the available camera, the video stream pushing method can further include:
obtaining a camera identifier from the camera first opening request, and determining whether a to-be-requested camera corresponding to the camera identifier is the physical camera;
judging, if it is determined that the to-be-requested camera corresponding to the camera identifier is not the physical camera, whether the camera identifier can be used, and determining, according to a judgment result, whether or not to use the to-be-requested camera as the available camera, so as to obtain the available camera;
modifying, if it is determined that the to-be-requested camera corresponding to the camera identifier is the physical camera, the camera identifier based on a first modification strategy, and updating the camera identifier according to a modification result, so that the to-be-requested camera corresponding to the camera identifier belongs to the virtual camera, and performing the step of judging whether the camera identifier can be used, again.

According to one or more embodiments of the present disclosure, Example 4 provides the method of Example 3, and the judging whether the camera identifier can be used, and determining, according to a judgment result, whether or not to use the to-be-requested camera as the available camera, so as to obtain the available camera, can include:
judging whether the camera identifier has been used;
modifying, if the camera identifier has been used, the camera identifier based on a second modification strategy, and updating the camera identifier according to a modification result, and performing the step of judging whether the camera identifier has been used, again;
using, if the camera identifier has not been used and the camera identifier belongs to a valid identifier, the to-be-requested camera corresponding to the camera identifier as the available camera.

According to one or more embodiments of the present disclosure, Example 5 provides the method of Example 2, wherein a physical camera module of the physical camera and a virtual camera module of the virtual camera are both deployed in a hardware abstraction layer of an Android system, and the virtual camera is opened through a camera service set in a framework layer of the Android system.

According to one or more embodiments of the present disclosure, Example 6 provides the method of Example 1, and the video stream pushing method can further include:
obtaining, in response to a camera third opening request, an application package name from the camera third opening request;
opening, if the application package name is in a preset white list, a physical camera corresponding to the camera third opening request.

According to one or more embodiments of the present disclosure, Example 7 provides the method of Example 1, wherein an image source selection window is further provided on the display interface, at least two image source identifiers are provided on the image source selection window, and the at least two image source identifiers include an image source identifier corresponding to the physical camera.

According to one or more embodiments of the present disclosure, Example 8 provides the method of Example 7, and the video stream pushing method can further include:
determining, in response to a first click operation on the image source selection window for a first camera, a selected image source identifier, wherein the first camera belongs to a virtual camera;
accordingly, the displaying an image data stream captured by an opened physical camera in an application window of the first application includes:
displaying, if the first application succeeds in requesting the first camera and the selected image source identifier corresponds to a physical camera, the image data stream captured by the opened physical camera in the application window of the first application.

According to one or more embodiments of the present disclosure, Example 9 provides the method of Example 7, and the video stream pushing method can further include:
determining, in response to a second click operation on the image source selection window for a second camera, a selected image source identifier, wherein the second camera belongs to a virtual camera;
in response to a camera fourth opening request initiated by the user for a third application, displaying, if the third application succeeds in requesting the second camera and the selected image source identifier corresponds to a generated data stream or a processed data stream obtained by processing the image data stream, the generated data stream or the processed data stream in an application window of the third application.

According to one or more embodiments of the present disclosure, Example 10 provides a video stream pushing apparatus, which can include:
a display interface displaying module, configured to display a display interface, wherein at least two application windows are provided on the display interface;
an image data stream first displaying module, configured to display, in response to a camera first opening request initiated by a user for a first application, an image data stream captured by an opened physical camera in an application window of the first application;
an image data stream second displaying module, configured to display, in response to a camera second opening request initiated by the user for a second application, the image data stream in an application window of the second application.

According to one or more embodiments of the present disclosure, Example 11 provides the apparatus of Example 7, and the video stream pushing apparatus can further include:
an available camera opening module, configured to open an available camera after responding to the camera first opening request initiated by the user for the first application, wherein the available camera belongs to a virtual camera;
a video data obtaining module, configured to obtain video data matched with the available camera, wherein the video data includes the image data stream captured by the opened physical camera matched with the available camera;
accordingly, the image data stream first displaying module includes:
an image data stream displaying first unit, configured to send the video data to the opened available camera, so that the first application succeeding in requesting the available camera obtains the video data, and display the obtained video data in the application window of the first application.

According to one or more embodiments of the present disclosure, Example 12 provides the apparatus of Example 11, and the video stream pushing apparatus can further include:
a physical camera determining module, configured to obtain, before the available camera is opened, a camera identifier from the camera first opening request, and determine whether a to-be-requested camera corresponding to the camera identifier is the physical camera;
an available camera obtaining module, configured to judge, if it is determined that the to-be-requested camera corresponding to the camera identifier is not the physical camera, whether the camera identifier can be used, and determine, according to a judgment result, whether or not to use the to-be-requested camera as the available camera, so as to obtain the available camera;
a camera identifier judging module, configured to modify, if it is determined that the to-be-requested camera corresponding to the camera identifier is the physical camera, the camera identifier based on a first modification strategy, and update the camera identifier according to a modification result, so that the to-be-requested camera corresponding to the camera identifier belongs to the virtual camera, and perform the step of judging whether the camera identifier can be used, again.

According to one or more embodiments of the present disclosure, Example 13 provides the apparatus of Example 12, and the available camera obtaining module can include:
a camera identifier judging unit, configured to judge whether the camera identifier has been used;
a camera identifier re-judging unit, configured to modify, if the camera identifier has been used, the camera identifier based on a second modification strategy, and update the camera identifier according to a modification result, and perform the step of judging whether the camera identifier has been used, again;
an available camera obtaining unit, configured to use, if the camera identifier has not been used and the camera identifier belongs to a valid identifier, the to-be-requested camera corresponding to the camera identifier as the available camera.

According to one or more embodiments of the present disclosure, Example 14 provides the apparatus of Example 11, wherein a physical camera module of the physical camera and a virtual camera module of the virtual camera are both deployed in a hardware abstraction layer of an Android system, and the virtual camera is opened through a camera service set in a framework layer of the Android system.

According to one or more embodiments of the present disclosure, Example 15 provides the apparatus of Example 10, and the video stream pushing apparatus can further include:
an application package name obtaining module, configured to obtain, in response to a camera third opening request, an application package name from the camera third opening request;
an physical camera opening module, configured to open, if the application package name is in a preset white list, a physical camera corresponding to the camera third opening request.

According to one or more embodiments of the present disclosure, Example 16 provides the apparatus of Example 10, wherein an image source selection window is further provided on the display interface, at least two image source identifiers are provided on the image source selection window, and the at least two image source identifiers comprise an image source identifier corresponding to the physical camera.

According to one or more embodiments of the present disclosure, Example 17 provides the apparatus of Example 16, and the video stream pushing apparatus can further include:
an image source identifier first determining module, configured to determine, in response to a first click operation on the image source selection window for a first camera, a selected image source identifier, wherein the first camera belongs to a virtual camera;
accordingly, the image data stream first displaying module can include:
an image data stream displaying second unit, configured to display, if the first application succeeds in requesting the first camera and the selected image source identifier corresponds to a physical camera, the image data stream captured by the opened physical camera in the application window of the first application.

According to one or more embodiments of the present disclosure, Example 18 provides the apparatus of Example 16, and the video stream pushing apparatus can further include:
an image source identifier second determining module, configured to determine, in response to a second click operation on the image source selection window for a second camera, a selected image source identifier, wherein the second camera belongs to a virtual camera;
a generated data stream displaying module, configured to, in response to a camera fourth opening request initiated by the user for a third application, display, if the third application succeeds in requesting the second camera and the selected image source identifier corresponds to a generated data stream or a processed data stream obtained by processing the image data stream, the generated data stream or the processed data stream in an application window of the third application.

Furthermore, although various operations are depicted in a specific order, this should not be understood as requiring these operations to be executed in the specific order shown or in a sequential order. Under certain circumstances, multitasking and parallel processing may be advantageous. Similarly, although specific implementation details are included in the above discussion, these should not be interpreted as limiting the scope of the present disclosure. Some features described in the context of separate embodiments may also be implemented in combination in an individual embodiment. Conversely, various features described in the context of an individual embodiment may also be implemented in multiple embodiments, individually, or in any suitable subcombination.

Although the subject matter is described in the language specific to structural features and/or method logical acts, it is to be understood that the subject matter defined in the appended claims is not necessarily limited to the specific features or acts described above. Conversely, the specific features and acts described above are merely exemplary forms for implementing the claims.

## Claims

1. A video stream pushing method, comprising:
displaying a display interface, wherein at least two application windows are provided on the display interface;
displaying, in response to a camera first opening request initiated by a user for a first application, an image data stream captured by an opened physical camera in an application window of the first application; and
displaying, in response to a camera second opening request initiated by the user for a second application, the image data stream in an application window of the second application.

2. The method according to claim 1, wherein after responding to the camera first opening request initiated by the user for the first application, the method further comprises:
opening an available camera, wherein the available camera belongs to a virtual camera;
obtaining video data matched with the available camera, wherein the video data comprises the image data stream captured by the opened physical camera matched with the available camera;
the displaying an image data stream captured by an opened physical camera in an application window of the first application comprises:
sending the video data to the opened available camera, so that the first application succeeding in requesting the available camera obtains the video data, and displaying the obtained video data in the application window of the first application.

3. The method according to claim 2, wherein before opening the available camera, the method further comprises:
obtaining a camera identifier from the camera first opening request, and determining whether a to-be-requested camera corresponding to the camera identifier is the physical camera;
judging, if it is determined that the to-be-requested camera corresponding to the camera identifier is not the physical camera, whether the camera identifier can be used, and determining, according to a judgment result, whether or not to use the to-be-requested camera as the available camera, so as to obtain the available camera;
modifying, if it is determined that the to-be-requested camera corresponding to the camera identifier is the physical camera, the camera identifier based on a first modification strategy, and updating the camera identifier according to a modification result, so that the to-be-requested camera corresponding to the camera identifier belongs to the virtual camera, and performing the judging whether the camera identifier can be used, again.

4. The method according to claim 3, wherein the judging whether the camera identifier can be used, and determining, according to a judgment result, whether or not to use the to-be-requested camera as the available camera, so as to obtain the available camera, comprises:
judging whether the camera identifier has been used;
modifying, if the camera identifier has been used, the camera identifier based on a second modification strategy, and updating the camera identifier according to a modification result, and performing the judging whether the camera identifier has been used, again;
using, if the camera identifier has not been used and the camera identifier belongs to a valid identifier, the to-be-requested camera corresponding to the camera identifier as the available camera.

5. The method according to claim 2, wherein a physical camera module of the physical camera and a virtual camera module of the virtual camera are both deployed in a hardware abstraction layer of an Android system, and the virtual camera is opened through a camera service set in a framework layer of the Android system.

6. The method according to claim 1, further comprising:
obtaining, in response to a camera third opening request, an application package name from the camera third opening request;
opening, if the application package name is in a preset white list, a physical camera corresponding to the camera third opening request.

7. The method according to claim 1, wherein an image source selection window is further provided on the display interface, at least two image source identifiers are provided on the image source selection window, and the at least two image source identifiers comprise an image source identifier corresponding to the physical camera.

8. The method according to claim 7, further comprising:
determining, in response to a first click operation on the image source selection window for a first camera, a selected image source identifier, wherein the first camera belongs to a virtual camera;
the displaying an image data stream captured by an opened physical camera in an application window of the first application comprises:
displaying, if the first application succeeds in requesting the first camera and the selected image source identifier corresponds to a physical camera, the image data stream captured by the opened physical camera in the application window of the first application.

9. The method according to claim 7, further comprising:
determining, in response to a second click operation on the image source selection window for a second camera, a selected image source identifier, wherein the second camera belongs to a virtual camera;
in response to a camera fourth opening request initiated by the user for a third application, displaying, if the third application succeeds in requesting the second camera and the selected image source identifier corresponds to a generated data stream or a processed data stream obtained by processing the image data stream, the generated data stream or the processed data stream in an application window of the third application.

10. A video stream pushing apparatus, comprising:
a display interface displaying module, configured to display a display interface, wherein at least two application windows are provided on the display interface;
an image data stream first displaying module, configured to display, in response to a camera first opening request initiated by a user for a first application, an image data stream captured by an opened physical camera in an application window of the first application; and
an image data stream second displaying module, configured to display, in response to a camera second opening request initiated by the user for a second application, the image data stream in an application window of the second application.

11. A terminal device comprising:
at least one processor;
a memory, configured to store at least one program;
wherein the at least one program upon being executed by the at least one processor, causes the at least one processor to realize the video stream pushing method according to any one of claims 1-9.

12. A computer-readable storage medium, storing a computer program thereon, wherein the computer program, upon being executed by a computer processor, realizes the video stream pushing method according to any one of claims 1-9.
